# EUROPÄISCHE PATENTANMELDUNG

(11) **EP 1 110 994 A2**
(43) Veröffentlichungstag der Anmeldung: **27.06.2001**
(21) Anmeldenummer: 00126273.2
(22) Anmeldetag: 01.12.2000
(51) Int. Cl.: C08J 9/00

(54) **Verfahren zur Herstellung eines Polyurethan-Schaumes**

(30) Priorität: 02.12.1999 DE 19958015
(71) Anmelder: RAMPF Giessharze GmbH & Co. KG, 72661 Grafenberg (DE)
(72) Erfinder: Giesen, Franz-Josef, 72581 Dettingen (DE); Giacaglia, Rogerio, 72072 Tübingen (DE); Gräter, Peter Dr., 70599 Stuttgart (DE)
(74) Vertreter: Lucht, Silvia, Dipl.-Phys.

(57) **Zusammenfassung**

Es wird ein Verfahren zur Herstellung und zum Aufbringen eines Polyurethan-Schaums auf eine Oberfläche vorgeschlagen, bei dem die Polyol-Komponente und die Isocyanat-Komponente unter Nieder- oder Hochdruck in einem Mischkopf vermischt und dosiert werden und anschließend auf die Oberfläche aufgebracht werden. Vor oder bei dem Mischen der beiden Komponeten werden organofunktionelle Silane zugefügt.

## Beschreibung

### Stand der Technik

Die Erfindung geht von einem Verfahren zur Herstellung und zum Aufbringen eines Polyurethan-Schaumes auf eine Oberfläche nach dem Oberbegriff des Anspruchs 1 aus.

Nach dem Stand der Technik werden vor dem Herstellen und Aufbringen von Polyurethan-Schäumen auf metallische oder andere Oberflächen externe Haftvermittler auf die Oberfläche aufgetragen, um eine ausreichende Haftung der Polyurethan-Schäume auf den Oberflächen zu gewährleisten. Zu derartigen Haftvermittlern zählen beispielsweise Harz- oder Silanprodukte, welche umweltschädliche Lösungsmittel enthalten und damit eine Umweltbelastung darstellen. Außerdem ist das Verfahren aufgrund des zusätzlichen Verfahrensschritts aufwendig. Darüberhinaus werden die Oberflächen vor dem Auftragen der Polyurethan-Schäume häufig physikalischen Vorbehandlungsverfahren unterzogen, wie beispielsweise Aufrauhen, Beflammung, Korona-, Plasma- oder Fluorierungsverfahren. Diese stellen einen zusätzlichen Verfahrensschritt dar und gestalten daher das Verfahren aufwendig und teuer.

### Die Erfindung und ihre Vorteile

Das erfindungsgemäße Verfahren mit dem kennzeichnenden Merkmalen des Anspruchs 1 hat demgegenüber den Vorteil, daß der Polyurethan-Schaum ohne zusätzliche Vorbehandlungsverfahren chemischer oder physikalischer Art auf die Oberfläche aufgebracht werden kann und dabei eine so stabile Haftung erzielt wird, daß beim Abreißversuch der Polyurethan-Schaum zerstört wird. Außerdem ist eine Hydrolysefestigkeit der Haftung gegeben. Eine derartige stabile Haftung findet bei fast allen Metalloberflächen und sonstigen Oberflächen, wie beispielsweise Kunststoffe, statt. Zu den metallischen Oberflächen zählen beispielsweise Edelstahl, Aluminium, Stahl, Kupfer, Messing, Gelbchrom, Blech und Zink. Wie bei den bekannten Verfahren ist es auch bei diesem Verfahren zweckmäßig, vor dem Auftrag des Polyurethan-Schaums die Oberfläche zu entfetten. Hierbei wird eine sehr gute, über die Reißfestigkeit des Schaumes hinausgehende Haftung erreicht. Eine Anwendung für das erfindungsgemäße Verfahren ist beispielsweise das Auftragen von Polyurethanweichschaumdichtungen mittels Niederdruck-2K oder 3K-Misch- und Dosierschaumanlagen, beispielsweise in der Automobil- oder Elektroindustrie. Die Abkürzungen 2K und 3K stehen hierbei für zwei und drei Komponenten. Als Anwendungsbeispiele seien hier Edelstahlschaltschränke, Kfz-Türinnenteile, Edelstahlspülen und Aluminiumkoffer genannt. Darüberhinaus wird das erfindungsgemäße Verfahren bei 2K-Polyurethan-Schaumbeschichtungen eingesetzt, die im Spritz- odei Sprühverfahren mit Nieder- oder Hochdruckanlagen aufgetrager werden, wie beispielsweise Flächenbeschichtungen in der Bauindustrie. Polyurethanverbundformteile, die üblicherweise mit Hochdruckanlagen hergestellt werden, wie beispielsweise schaumummantelte Lenkräder oder Transportträger sind ein weiteres Anwendungsbeispiel.

Nach einer vorteilhaften Ausgestaltung werden die Silane der Polyol-Komponente zugesetzt, bevor die Polyol- und die Isocyanat-Komponente vermischt werden. Bei den Silanen kann es sich um Aminosilane oder Silankombinationen handeln. Dies gilt für Polyol-Komponenten, die keine störende mineralische Verdickungsmittel oder Füllstoffe enthalten, auf denen das Silan aufzieht und somit z. B. der metallischen Verankerung nicht mehr zur Verfügung steht.

Nach einer weiteren vorteilhaften Ausgestaltung der Erfindung, werden die Silane beim Vermischen der Polyol- und der Isocyanat-Komponente zugefügt. Dies kann räumlich gesehen entweder direkt an dem Ort geschehen, an dem auch die Polyol-Komponente und die Isocyanat-Komponente aufeinandertreffen oder eine kurze Wegstrecke unmittelbar nach diesem Ort. Polyurethan-Schäume, bei denen anwendungsspezifisch die Polyol-Komponente störende mineralische Verdickungs- oder Füllstoffe besitzt, können ebenfalls unter stabiler Haftung an metallischen Oberflächen aufgebracht werden, in dem die Silane erst kurz vor der Reaktion der Polyol- und der Isocyanat-Komponente zugegeben werden. Das Vermischen und Zufügen geschieht beispielsweise bei der maschinellen Verarbeitung in der Misch- und Dosieranlage, in dem das Silan als dritte Komponente dem Mischkopf zugeführt wird. Der Haftungseffekt ist identisch mit demjenigen einer Rezeptierung frei von störenden Füllstoffen.

Sowohl bei den Polyol-Komponenten mit als auch ohne störende Füllstoffe ist die stabile Haftung nach der klebfreien Aushärtung gegeben. Abschälprüfungen und Hydrolysefestigkeitsprüfungen können nach 24 Stunden durchgeführt werden, wenn die Reaktion komplett abgeschlossen ist.

Nach einer weiteren vorteilhaften Ausgestaltung der Erfindung werden als Silane AMEO, AMMO oder DAMO oder Kombinationen dieser Aminosilane zur Haftung des Polyurethan-Schaumes an Metalloberflächen zugesetzt. Die chemischen Bezeichnungen dieser Silane lauten:
- AMEO: 3-(Triethoxysilyl)-Propylamin oder 3-Aminopropyl-triethoxysilan,
- AMMO: 3-(Trimethoxysilyl)-Propylamin oder 3-Aminopropyl-trimethoxysilan,
- DAMO: N-(3-(Trimethoxysilyl)-Propyl)-Ethylendiamin oder N-(2-Aminoethyl-3-Aminopropyl)-Trimethoxysilan.
Vorteilhafterweise beträgt die Zusatzmenge in der Polyol-Komponente zwischen 0,1 und 10,0 Gew. % Silane bezogen auf die Polyol-Komponente.

Für die Haftung an Kunststoffen werden folgende Silane zugesetzt: MEMO bei Polyester, ABS und Kautschuk, GLYMO bei Melaminharzen, PBT, PS und Acrytat, VTMO bei vinylhaltigen Polymeren. Die chemischen Bezeichnungen dieser Silane lauten:
MEMO 3-Trimethoxysilylpropyl-Methacrylat,
GLYMO 3-(2,3-Epoxypropoxy)-Propyl)-Trimethoxysilan oder 3-Glycidyloxypropyl-Trimethoxysilan,
VTMO Trimethoxyvinylsilan oder Vinyl-Trimethoxysilan.
Das bei der metallischen Haftung bewährte AMEO wirkt ebenfalls bei vielen Kunststoffen wie Polycarbonat, Polysulfon, Phenolen und Epoxiden.

Nach einer weiteren vorteilhaften Ausgestaltung der Erfindung werden der Polyol-Komponente Amine wie beispielsweise Diethanolamin, Triethanolamin, Diamine zugegeben. Desweiteren können Ammoniumverbindungen wie beispielsweise Ammoniumacetat, Ammoniumchlorid, Ammoniumcarbonat, Ammoniumfluorid, Ammoniumhydroxid, Ammoniumphosphat oder Mischungen dieser Ammoniumverbindungen hinzugefügt werden. Die aminischen Polyurethanvernetzer bewirken die Aufhebung sterischer Effekte und erleichtern die notwendige Hydrolyse und damit verbundende Silanolbildung des Silans. Außerdem wird eine Komplexierung der Metalloberfläche bewirkt. Schließlich wirken die Amine als Vernetzer. Die Ammoniumverbindungen erleichtern hauptsächlich die Hydrolyse des Silans und bewirken die Komplexierung der Metalloberfläche. Dadurch werden verbesserte Voraussetzungen für die Haftung des Polyurethan-Schaums an der Oberfläche geschaffen.

Nach einer weiteren vorteilhaften Ausgestaltung der Erfindung wird die Oberfläche, auf die der Polyurethan-Schaum aufgebracht werden soll, zuvor einer Elektro/Lichtbogen-Befunkung unterzogen. Dadurch wird auch unter extremer Hydrolysebeanspruchung eine sehr gute Haftung an Metalloberflächen erzielt. Die Befunkung erfolgt beispielsweise mittels einer Wolframelektrode. Durch die Behandlung wird die Metalloberfläche oxidativ verändert. Eine entsprechende Vorrichtung zur Durchführung der Elektro/Lichtbogen-Befunkung kann an dem Mischkopf einer Misch- und Dosieranlage zum Auftragen des Polyurethan-Schaumes angeordnet werden. Die Befunkung erfolgt unmittelbar vor dem Auftragen des Polyurethan-Schaums oder einen längeren Zeitraum davor. Im ersten Fall kann an der Oberfläche, die mit dem Schaum versehen werden soll, die Befunkung und das Auftragen parallel an unterschiedlichen Stellen erfolgen. Beide Vorgänge finden damit gleichzeitig statt. Die Befunkung bedeutet daher keinen zusätzlichen Verfahrensschritt.

Anstelle einer Elektro/Lichtbogen-Befunkung kann die Oberfläche einer Plasmabehandlung unter Normaldruck unterzogen werden. Der Energiegehalt des Plasmas ist sehr hoch und reicht aus, um mit Verunreinigungen auf der Oberfläche oder mit der Oberfläche selbst zu reagieren. Die Oberfläche ist damit für das Auftragen des Polyurethan-Schaums vorbereitet.

Die Elektro/Lichtbogen-Befunkung der Oberfläche kann auch vor dem Auftragen eines Polyurethan-Schaums stattfinden, der keine organofunktionelle Silane enthält. Die Befunkung führt auch in diesem Fall zu einer Behandlung der Oberfläche, welche eine bessere Haftung des Polyurethan-Schaums zur Folge hat.

Nach einer weiteren vorteilhaften Ausgestaltung des erfindungsgemäßen Verfahrens erfolgt die Hydrolyse des Silans durch den Verbrauch des Wassers der Polyol-Komponente und/ oder der Restfeuchte der zu beaufschlagenden Oberfläche. Dadurch werden Polyurethanelastomere und Duromere bzw. Kleber zu einer stabilen Haftung auf der Oberfläche gebracht. Es entsteht dann ein ungeschäumtes Polyurethan.

Nach einer weiteren vorteilhaften Ausgestaltung des erfindungsgemäßen Verfahrens enthält die Polyol-Komponente Thixotropierungsmittel oder mineralische Füllstoffe, wie beispielsweise vorab Silikon behandelte Kieselsäure, auf denen das organofunktionelle Silan nicht aufzieht und somit der eigentlichen Haftvermittlung zur Verfügung steht.

Weitere Vorteile und vorteilhafte Ausgestaltungen der Erfindung sind den nachfolgenden Beispielen und den Ansprüchen entnehmbar.

### Beispiel 1

Verarbeitung Dichtungsschaum für Edelstahl- Schaltschränke auf Niederdruck 2K Misch- und Dosieranlagen.

### Rezeptur:

| Polyol-Komponente (A-Komponente), OH-Zahl 150 | |
|---|---|
| Polyol | 86 % |
| Wasser | 2 % |
| AMEO | 3 % |
| Triethanolamin | 3 % |
| Tertiärer Aminkatalysator | 1 % |
| Farbstoff | 1 % |
| Schaumstabilisator (Polyethersiloxan) | 1 % |
| Verdickungsmittel Kieselsäure | 3 % |
| | |
| Isocyanat-Komponente (B-Komponente), MDI-Isocyanat, NCO-Gehalt, | 31 % |

Mischungsverhältnis A : B 4 : 1 Gew. Teile
Verarbeitungszeit 35 Sekunden, klebfrei nach 7 Minuten, Schaumdichte 0,3 g/ccm, 8 Shore A-Härte. Schaum mit guter Integralhaut und hoher mechanischer Festigkeit.
Haftungsprüfung 30 Minuten nach der Verschäumung:
der Schaum kann nur unter Zerstörung vom entfetteten Edelstahlgehäuse entfernt werden.

Ein identisches Ergebnis wurde bei verzinkten Tür-Montageträgern, gelbchromatierten Kugellagerteilen und Aluminium Kofferdeckel erreicht.

### 2. Beispiel

Schaumkleber auf Aluminium oder verzinktem Stahlband, Anwendung Bauindustrie, Schall- und Wärme isolierend.

Obige Rezeptierung

Verarbeitung mittels 2K-Hochdruckanlage und Sprühauftrag.

Eigenschaften wie obiges Beispiel.

### 3. Beispiel

Formteilverbund, Montageträger, Stahl/Integralschaum.

Rezeptierung wie obiges Beispiel, jedoch OH-Zahl 250.

Verarbeitung mittels 2K-Niederdruck oder Hochdruckanlage.

Eigenschaften: hohe Haftfestigkeit, hohe Mechanik.

### 4. Beispiel

Dichtungsschaum, bei ABS-Elektrogehäusen.

Rezeptierung wie unter 1, jedoch an Stelle von AMEO Einsatz von GLYMO/MEMO 1:1.

Verarbeitung mittels Niederdruck 2K Misch- und Dosierschaumanlage.

Eigenschaften wie unter 1.

### 5. Beispiel

Wie Beispiel 1, jedoch wird die Metalloberfläche zusätzlich durch die integrierte Elektrobefunkung behandelt.

Ergebnis: Auch bei Wasserlagerungen kann die Dichtung nicht ohne Zerstörung von der Oberfläche gelöst werden.

Die A-Komponenten-Rezeptierungen sind monatelang lagerstabil und wirksam ohne Verlust der Haftungskräfte.

Alle in der Beschreibung und in den nachfolgenden Ansprüchen dargestellten Merkmale können sowohl einzeln als auch in beliebiger Kombination miteinander erfindungswesentlich sein.

## Patentansprüche

1. Verfahren zur Herstellung und zum Aufbringen eines Polyurethan-Schaumes auf eine Oberfläche, bei dem die Polyol-Komponente und die Isocyanat-Komponente unter Nieder- oder Hochdruck in einem Mischkopf vermischt und dosiert werden und anschließend auf die Oberfläche aufgebracht werden,
dadurch gekennzeichnet,
daß organofunktionelle Silane zugefügt werden.

2. Verfahren nach Anspruch 1, dadurch gekennzeichnet, daß die Silane der Polyol-Komponente zugesetzt werden, bevor die Polyol- und die Isocyanat-Komponente vermischt werden.

3. Verfahren nach Anspruch 1, dadurch gekennzeichnet, daß die Silane beim Vermischen der Polyol- und der Isocyanat-Komponente im Mischkopf zugefügt werden.

4. Verfahren nach einem der vorhergehenden Ansprüche, dadurch gekennzeichnet, daß als Silane die Aminosilane AMEO, AMMO, oder DAMO oder Kombinationen dieser Aminosilane zugesetzt werden.

5. Verfahren nach Anspruch 4, dadurch gekennzeichnet, daß Ammoniumverbindungen, insbesondere Ammoniumacetat, Ammoniumchlorid, Ammoniumcarbonat, Ammoniumfluorid, Ammoniumhydroxid und Ammoniumphosphat, zugegeben werden.

6. Verfahren nach Anspruch 4 oder 5, dadurch gekennzeichnet, daß 0,1 bis 10,0 Gew. % Aminosilane bezogen auf die Polyol-Komponente zugegeben werden.

7. Verfahren nach einem der vorhergehenden Ansprüche, dadurch gekennzeichnet, daß der Polyol-Komponente Amine und/ oder Ammoniumverbindungen zugegeben werden.

8. Verfahren nach einem der vorhergehenden Ansprüche, dadurch gekennzeichnet, daß die Oberfläche, auf die der Polyurethan-Schaum aufgebracht werden soll, einer Elektro/ Lichtbogen-Befunkung unterzogen wird.

9. Verfahren nach einem der vorhergehenden Ansprüche, dadurch gekennzeichnet, daß die Hydrolyse des Silans durch den Verbrauch des Wassers der Polyol-Komponente und/ oder der Restfeuchte der zu beaufschlagenden Oberfläche erfolgt.

10. Verfahren nach einem der vorhergehenden Ansprüche, dadurch gekennzeichnet, daß die Polyol-Komponente Thixotropierungsmittel oder mineralische Füllstoffe, insbesondere vorab Silikon-behandelte Kieselsäure, enthält.
